# EUROPEAN PATENT SPECIFICATION

(11) **EP 0 507 253 B1**
(45) Date of publication and mention of the grant of the patent: **05.11.1997**
(21) Application number: 92105543.0
(22) Date of filing: 31.03.1992
(51) Int. Cl.: H04N 9/87, H04N 5/87, H04N 9/79

(54) **Apparatus for converting input video signal to motion picture film image**
Vorrichtung zur Umwandlung eines Videoeingangssignals in ein kinematographisches Filmbild
Dispositif pour convertir un signal vidéo d'entrée en une image animée de film cinématographique

(30) Priority: 31.03.1991 JP 92910/91
(43) Date of publication of application: 07.10.1992
(73) Proprietor: SONY CORPORATION, Tokyo (JP)
(72) Inventor: Kobayashi, Ikuo, Shinagawa-ku Tokyo (JP); Henmi, Fumiaki, Shinagawa-ku Tokyo (JP)
(74) Representative: Melzer, Wolfgang, Dipl.-Ing.

(56) References cited:
- EP-A- 0 395 276
- US-A- 4 344 088
- SMPTE JOURNAL vol. 97, no. 10, October 1988, SCARSDALE, NY US pages 833 - 843 , XP48032 THORPE ET AL. 'HDTV electron beam recording'
- IMAGE TECHNOLOGY (JOURNAL OF THE BKSTS) vol. 72, no. 1, January 1990, LONDON GB pages 20 - 22 , XP87202 KRSLJANIN 'Electron beam recorder the link between HDVS and film'

## Description

### BACKGROUND OF THE INVENTION

This invention relates to a picture signal converting device and is suitable for use when converting a picture taken by a video camera to a movie film image.

There has been the electron beam recorder (EBR) as a conventional picture signal converting device designed to form a picture taken by a video camera on a movie film (SMPTE JOURNAL vol. 97, no. 10, October 1988, SCARSDALE, NY US pages 833 - 843, XP48032 THORPE ET AL. 'HDTV electron beam recording').

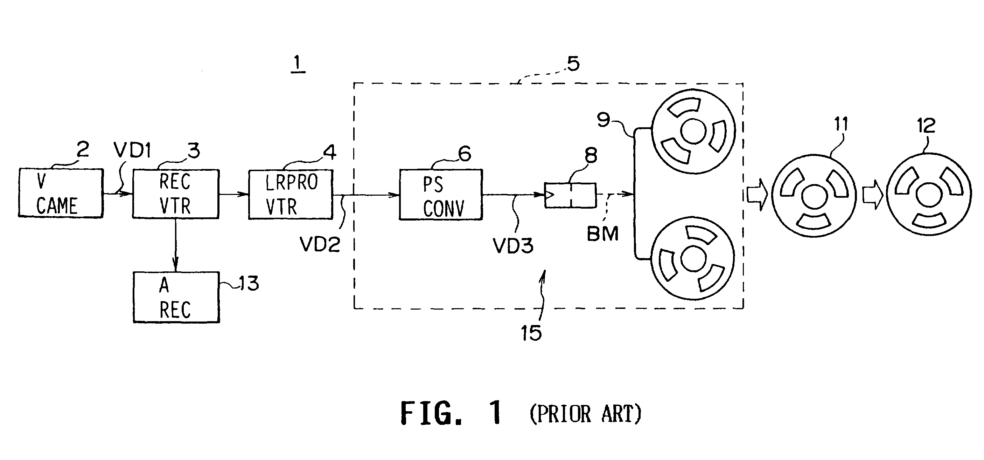

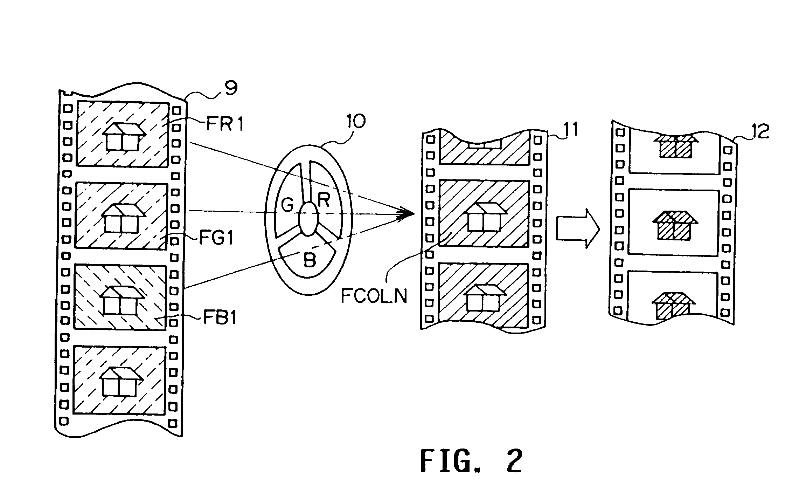

To be specific, as illustrated in Fig. 1, a picture signal converting device 1 temporarily records a video picture signal VD1 obtained from a video camera 2 in a recording VTR 3 and thereafter slow-reproduces this signal by use of a subsequent slow reproducing VTR 4. The signal is then inputted to an EBR device 5.

The EBR device 5 performs predetermined signal processing on a video picture signal VD2 consisting of the inputted slow reproducing picture in a picture signal converting circuit unit 6. Obtained is a film recording signal VD3 generated by sequentially and intermittently outputting 1-frame picture data according to red, green, and blue components. This signal VD3 is inputted to a beam gun 8 of a subsequent EBR unit 15.

The beam gun 8 scans an electron beam BM on a black-and-white film 9 while modulating the intensity of the electron beam BM with the film recording signal VD3. Only the contrast of the color picture based on the film recording signals VD3 is formed on the black-and-white film 9.

As illustrated in Fig. 2, the picture formed on the black-and-white film 9 is sequentially allocated one frame for each of the red, green, and blue components of an 1-frame picture intermittently outputted from the picture signal converting circuit unit 6.

Namely, the EBR unit 15 records the contrast of the red component of the film recording signal VD3 in a first recording area of the black-and-white film 9, thereby forming the contrast picture FR1 of the red component. The black-and-white film 9 is fed forwards by one frame and is temporarily stopped. The contrast of the green component of the recording signal VD3 is recorded in a subsequent second recording area, thereby forming the contrast picture FG1 of the green component. The black-and-white film 9 is further fed forwards by one frame and is temporarily stopped. The contrast of the blue component of the recording signal VD3 is recorded in a subsequent third recording area, thereby forming the blue component picture FB1.

In this manner, the respective contrast pictures FR1, FG1, and FB1 of the red, green, and blue components of the reproducing picture outputted from the slow reproducing VTR 4 are sequentially formed on the black-and-white film 9 in this order.

Further, among the contrast pictures FR1, FG1, and FB1 of the respective primary color components which are formed on the black-and-white film 9, the red component contrast picture FR1 is recorded in the first recording area of a color negative film 11 through the red subfilter R of a filter 10, while the green component contrast picture FG1 is also recorded in the first recording area of the color negative film 11 through the green subfilter G of the filter 10, while the blue component contrast picture is also recorded in the first recording area of the color negative film 11 but through the blue subfilter B of the filter 10. A color negative picture FCOLN synthesized with the red, green, and blue components is thereby formed on the first recording area of the color negative film 11.

Moreover, the picture on the color negative film 11 is transferred on to a color positive film 12, whereby this is usable as a movie film.

In the kind of the picture signal converting apparatus 1, the dynamic range representative of the width from the block level to the white level of the video signal is narrower than the one of the film. Therefore red, green and blue components of a video signal being narrow in dynamic range are level converted into by using a gamma correcting circuit composed of a non-linear circuit, apparently spreading a tone having a black level to a white level and then fitting the video signal with the tone of the film.

With this way, there is a problem that the color of pictures may change in the tone, chrominance and brightness of color.

There especially is a problem that it is difficult to convert video signals into in high-fidelity, because of the change of the color which becomes dark by reduction of the chrominance and brightness when especially monocular.

The video picture signal VD1 outputted from the video camera also is corrected to be fitted with gamma characteristic of a color phosphor of a CRT (cathode ray tube) (referred to camera gamma characteristic) so that a natural picture is obtained on the display of the CRT even if the video picture signal is directly inputted. There is no linear relationship among the input imaging picture in the video camera 2 and the picture outputted from the video camera.

In the picture signal converting apparatus 1 using a EBR unit also, it is necessary to correct the film recording signal VD1 to fit with the gamma characteristic of the film when a film recording signal VD1 composed of an electric signal is recorded on the film.

Therefor, in the picture signal converting circuit unit 6, the video picture signal VD2 is gamma corrected to fit with the gamma characteristic of the film.

This gamma correction is simultaneously carried out in the correction of the camera gamma characteristic and the correction fitting with the gamma characteristic of the film. It is necessary to make a correction curve has both the correcting characteristic based on the camera gamma characteristic and the correcting characteristic based on the gamma characteristic of the film.

However, in correcting thus together with the camera gamma characteristic and the film gamma characteristic, it becomes complicate to decide the correcting characteristic to be fitted with both the camera gamma characteristic and the film gamma characteristic. In addition, if changing one of the video camera or the film, the correcting characteristic have to be set again. As a result, there actually is restriction in selecting the video camera and the film.

By the way, according to the method of forming a picture on a black-and-white film 9 by using a electron beam BM, the recording thereof is performed by lowering the scanning speed of the electron beam BM to match the characteristics of the film so that the picture is formed with the highest resolution.

Hence, by reproducing the video picture signals VD1 recorded with the recording VTR 3 at a predetermined recording speed with slow reproducing VTR 4 and repeatedly outputting the same frame picture 30 times in 1 [second], a slow reproduced pictucture is obtained. Further, the pictures of 2 repetitions are fetched from the 30 repeated pictures and undergo timebase conversion, and the speed is reduced down to the predetermined signal speed. Obtained are such film recording signals forming the picture with the highest resolution on the black-and-white film 9.

Besides, when forming the contrast pictures FR1, FG1, and FB1 of the respective primary color components on the black-and-white film 9, the black-and-white film 9 is repeatedly stopped and fed. Corresponding to those operations, the red, green, and blue components of the film recording signals VD3 have to be sequentially and intermittently transmitted.

Therefore, the slow intermittent film recording signals VD3 can not be displayed as pictures using a monitor device adapted to input normal video picture signals. To judge whether or not the picture signal converting device 1 is operating correctly and the desired picture is formed on the film, it had to be awaited until the film was developed.

Particularly in the EBR device 5, a variety of signal processing such as a color correction processing to correct color deviation of the video picture signal VD1, a gamma processing to match gamma characteristics with the film characteristics, etc. is performed, and whether these processes are properly executed or not has to be managed. Because when a defect is detected on the developed film, and EBR recording has to be re-effected, and for other reasons, there arose problems in which the operation efficiency is lowered.

In addition, when producing a movie film and editing as of selectively fetching a predetermined scene from the video picture signals VD1 and recording it on the film, if the signals recorded on the film can directly monitored as a picture, it can be considered that the efficiency of editing can further be improved.

### SUMMARY OF THE INVENTION

The invention is as set out in the claim.

In view of the foregoing, an object of this invention is to provide a picture signal converting apparatus in which a picture signal forms a picture on a film with effectively correcting the deterioration of color.

Another object of this invention is to provide a picture signal converting apparatus in which it is made to further facilitate the gamma correction.

Further object of this invention is to provide a picture signal converting apparatus in which it is possible to directly monitor a picture to be recorded on a film.

The nature, principle and utility of the invention will become more apparent from the following detailed description when read in conjunction with the accompanying drawings in which like parts are designated by like reference numerals or characters.

### BRIEF DESCRIPTION OF THE DRAWINGS

In the accompanying drawings:
Fig. 1 is a block diagram depicting a conventional picture signal converting device;
Fig. 2 is a schematic diagram of assistance for explaining the conversion of a picture on to film;
Fig. 3 is a block diagram showing one embodiment of a picture signal converting device;
Fig. 4 is a schematic diagram illustrating the slow picture data;
Fig. 5 is a block diagram depicting the construction of a color correction circuit;
Fig. 6 is a characteristic curve diagram showing a gamma correction curve in the gamma correction circuit;
Fig. 7 is a schematic diagram illustrating the film recording data;
Fig. 8 is a block diagram illustrating the construction of a monitor circuit; and
Fig. 9A to 9G are signal waveform diagrams of assistance in explaining the operation of the monitor circuit.

### DETAILED DESCRIPTION OF THE INVENTION

Preferred embodiments of this invention will be described with reference to the accompanying drawings:

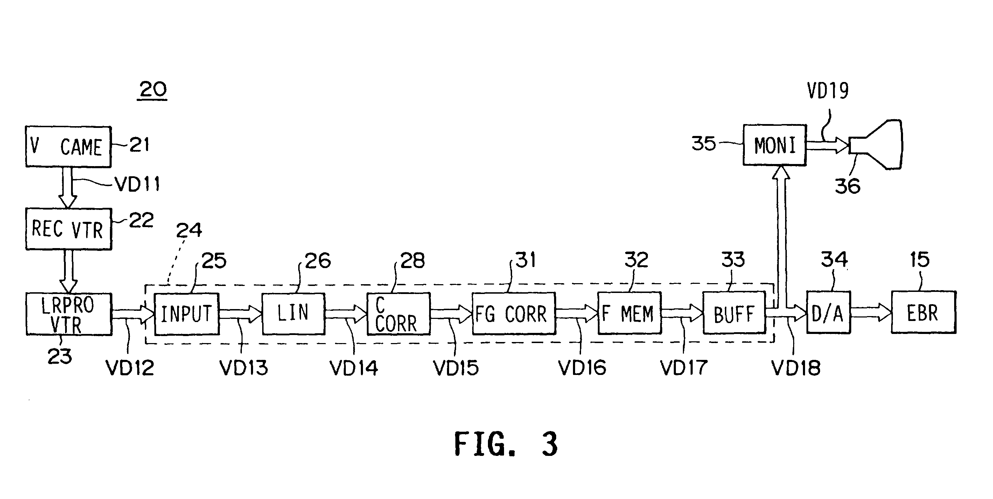

In Fig. 3 in which the portions corresponding to those of Fig. 1 are marked with the same reference numerals, a picture signal converting device 20 is an EBR device designed to form a high-definition digital video picture taken by a video camera 21, on a movie film. The video picture signal VD11 obtained from the video camera 21 is temporarily recorded with a recording digital VTR 22. Obtained thereafter from the subsequent slow reproducing digital VTR 23 are video picture data VD12 obtained by converting the normal video signals VD11 consisting of continuous video data of 30 frames per second in to slow pictures which is 1/30 in speed corresponding to the characteristics of a black-and-white film 9 (Fig. 2).

This conversion rate (1/30) is obtained by dividing the time allocated for 1-frame of the video signals VD11 by the time needed to record 1-frame of the video signals VD11 as a picture, in the EBR unit 15, on the black-and-white film 9.

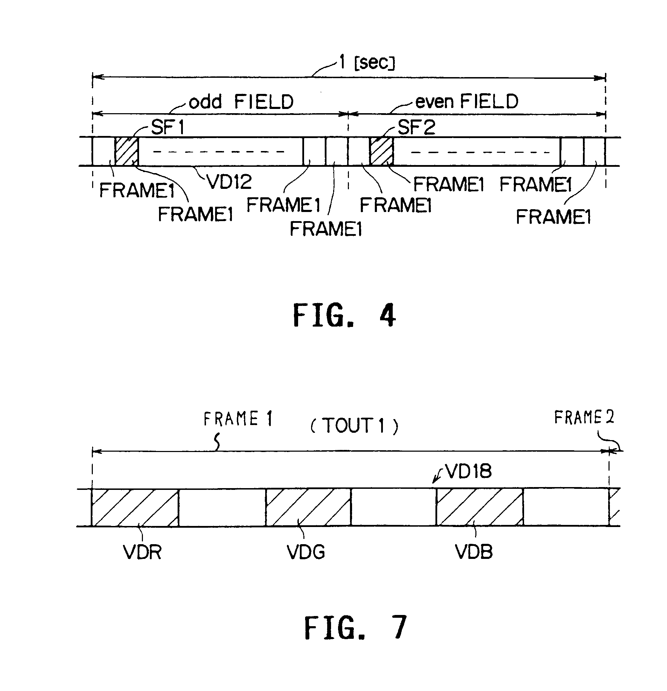

As the method of converting it into a slow picture, as illustrated in Fig. 4, the video picture data VD12 are comprised of 30 repetitions of the same 1-frame picture in 1 second. The first 15 repeated pictures are allocated to an odd FIELD of the slow reproduced picture, while the latter 15 repeated pictures are allocated to an even FIELD of the slow reproduced picture, thus forming a 1-frame still picture each second.

Hence, the repeated pictures for forming the still picture are sequentially changed over each second, thereby obtaining such a slow reproducing picture that the scene proceeds each second.

The such configured video picture data VD12 are inputted to an input circuit 25 of a subsequent picture signal converting circuit unit 24. As illustrated in Fig. 4, 1 repeated picture data is taken out of the 15 repeated picture data constituting the odd FIELD as a sample frame. Meanwhile , 1 repeated picture data is taken out of the 15 repeated picture data constituting the even FIELD as a sample frame SF2. The film recording picture data for 1 frame of the slow reproduced picture is prepared using the sample frames SF1 and SF2.

In addition, the input circuit 25 reduces the clock frequency (74.25 MHz in this embodiment) for transferring the video picture data VD12 down to a predetermined frequency conforming with the TTL/MOS hardware constituting the picture signal converting circuit unit 24. Also, the data are divided into red component data VDR, green component data VDG, and blue component data VDB in a predetermined digital matrix circuit.

The converted picture data VD13 obtained in this way are inputted to a subsequent linearizer 26, wherein gamma characteristics of the picture data corrected by the video camera 21 are corrected as to restore them to the original characteristics.

More specifically, the linearizer 26 multiplies the input converted picture data VD13 by the reverse characteristics of the video camera 21, thus returning them to the picture data corresponding to the picture originally inputted to the video camera 21.

In the ROM (read only memory), various data of the reverse characteristics are stored in respective addresses in accordance with the types of the camera in use. The data corresponding to the video camera 21 is read out.

Picture data VD14 corrected based on the camera gamma characteristics of the video camera 21 is inputted to a subsequent color correction circuit 28 in this manner.

Because of the picture data VD14 now inputted to be corrected, in the color correction circuit 28, the attention is paid only to the characteristic of the film. Color correction is effected by executing numerical computation among the red component, the green component, and the blue component to match the color rendering characteristics of the relevant film.

Further, when, in a posterior film gamma correction circuit 31, correcting the picture data in accordance with the gamma characteristics of the film, the color correction circuit 28 predicts that the red, green, and blue components of the picture data respectively change and corrects beforehand these color components.

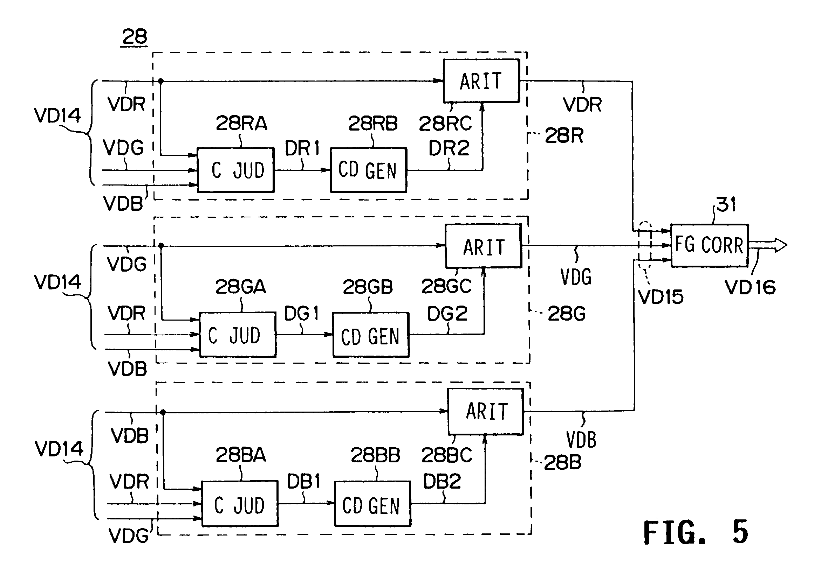

Namely, as depicted in Fig. 5, the color correction circuit 28 is composed of as red component correction circuit unit 28R for correcting the red component data VDR, a green component correction circuit unit 28G for correcting the green component data VDG, and a blue component correction circuit unit 28B for correcting blue component data VDB. In the red component correction circuit unit 28R, of the picture data VD14 inputted to the color correction circuit 28, the 12 [bit] data constituting the red component data VDR is inputted to an arithmetic circuit 28RC, while the high-order 8 [bit] data of the red color data VDR is inputted to color judging circuit 28RA.

Concurrently with this operation, the color judging circuit 28RA is inputted the high-order 3 [bit] data of the green component data VDG and the high-order 3 [bit] data of the blue component data VDB in the picture data VD14 inputted to the color correction circuit 28.

The data of the respective color components herein present more detailed representations on luminance, saturation, and hue indicated by the relevant data from the high-order bits to the low-order bits which configure the data thereof. With respect to the red component data inputted in the color judging circuit 28RA, the saturations are grouped based on the green and blue components.

The saturation groups are separated as, e.g., achromatic colors, monochromatic colors, and medium colors or flesh colors. Further, degrees thereof are judged, and the judgment information DR1 thereof is inputted to a subsequent correction data generating circuit 28RB.

The correction data generating circuit 28RB outputs red color correction data DR2 according to the judgment information DR1 inputted thereto and adds (or multiplies) the data to the red component data VDR in the arithmetic circuit 28RC.

The picture data corrected in the posterior film gamma correction circuit 31 decreases in saturation and luminance as it becomes a red, green, or blue monochrome. Therefore, in this embodiment, if the color indicated by the picture data VD14 is a red monochrome in the judging circuit 28RA, the correction data generating circuit 28RB outputs the red correction data DR2 thereby correcting so that the luminance level and the saturation of the red component data VDR will increase.

Contrastingly, in the green component correction circuit unit 28G, of the picture data VD14 inputted to the color correction circuit 28, the 12 [bit] data constituting the green component data VDG is inputted to the arithmetic circuit 28GC, while the high-order 8 [bit] data of the green component data VDG is inputted to the color judging circuit 28GA.

Concurrently with this, the color judging circuit 28GA is inputted the high-order 3 [bit] data of the red component data VDR and high-order 3 [bit] data of the blue component data VDR in the picture data VD14 inputted to the color correction circuit 28.

In the color judging circuit 28GA, the saturation of the green component data inputted thereto is grouped based on the red and blue components.

The saturation groups are separated as, e.g., achromatic colors, monochromatic colors, and medium colors or flesh colors. Further, degrees thereof are judged, and the judgment information DR1 thereof is inputted to a subsequent correction data generating circuit 28GB.

The correction data generating circuit 28GB outputs green color correction data DG2 according to the judgment information DG1 inputted thereto and adds (or multiplies) the data to the green component data VDG in the arithmetic circuit 28GC.

If the color indicated by the picture data VD14 is a green monochrome in the judging circuit 28GA, the correction data generating circuit 28GB herein outputs the green correction data DG2, thereby correcting so that the luminance level and the saturation of the green component data VDG will increase.

Contrastingly, in the blue component correction circuit unit 28B, of the picture data VD14 inputted to the color correction circuit 28, the 12 [bit] data constituting the blue component data VDB is inputted to the arithmetic circuit 28BC, while the high-order 8 [bit] data of the blue component data VDB is inputted to the color judging circuit 28BA.

Concurrently with this, the color judging circuit 28BA is inputted the high-order 3 [bit] data of the red component data VDR and high-order 3 [bit] data of the green component data VDG in the picture data VD14 inputted to the color correction circuit 28.

In the color judging circuit 28BA, the saturation of the blue component data inputted thereto is grouped based on the red and green components.

The saturation groups are separated as, e.g., achromatic colors, monochromatic colors, and medium colors or flesh colors. Further, degrees thereof are judged, and the judgment information DB1 thereof is inputted to a subsequent correction data generating circuit 28BB.

The correction data generating circuit 28BB outputs the blue color correction data DB2 according to the judgment information DB1 inputted thereto and adds (or multiplies) the data to the green component data VDB in the arithmetic circuit 28BC.

If the color indicated by the pictured data VD14 is a blue monochrome in the judging circuit 28BA, the correction data generating circuit 28BB herein outputs the blue correction data DB2, thereby correcting so that the luminance level and the saturation of the blue component data VDB will increase.

Thus, the picture data VD15 outputted from the color correction circuit 28 is corrected beforehand with respect to the color component which changes in the posterior film gamma correction circuit 31.

The film gamma correction circuit 31 is a circuit for correcting the picture data in accordance with the density characteristics of the film. When the intensity of the electron beam BM in the EBR unit 15 is modulated with the film recording data VD18 outputted from the picture signal converting circuit unit 24, the circuit 31 causes proper change of density on the film.

The optimum correction characteristic curve of the film gamma correction circuit 31 can be selected depending on the film in use, the picture cut, the picture scene, etc.

Hence, a conversion table composed of RAM (random access memory) is employed in the film gamma correction circuit 31. The correction characteristic curve can be set to a variety to the RAM by an input computer according to the conditions of the film, etc.

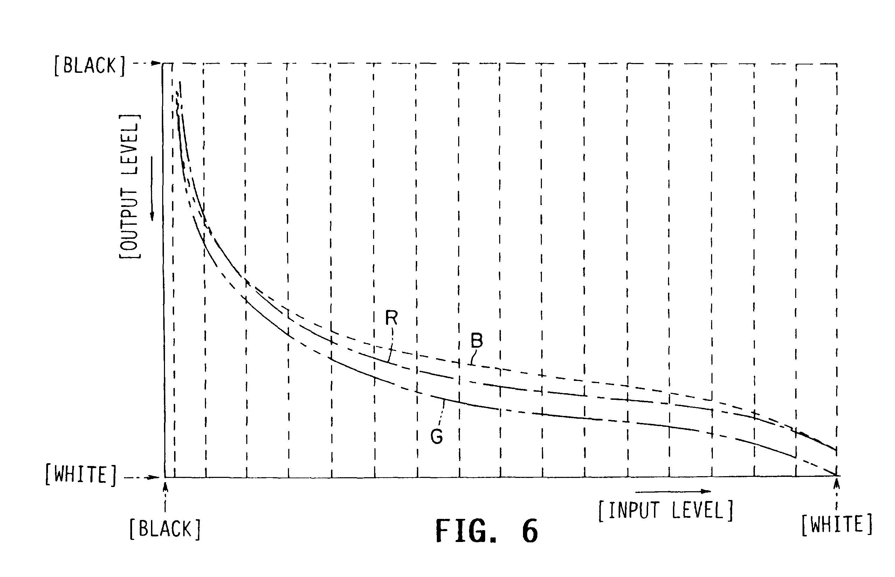

In this embodiment, due to the fact that the dynamic range from the black level to the white level in the video picture imaged by the video camera 21 is narrower than the relevant dynamic range of the film, such corrections as to apparently expand the dynamic range of gradation of the input picture data VD15 on the black level side and the white level side, as shown in Fig. 6, according to the correction characteristic curves (a red correction curve R, a green correction curve G, and a blue correction curve B) are effected to the red component data VDR, the green component data VDG, and the blue component data VDB.

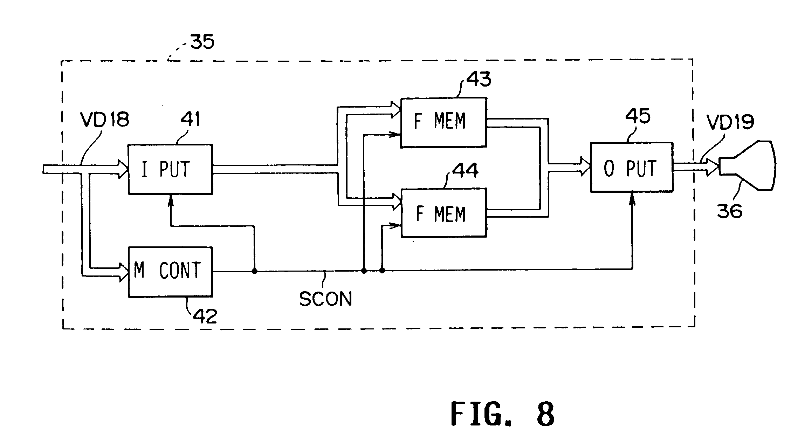

Picture data VD 16 corrected to match with the gamma characteristics of the film are temporarily stored in a frame memory 32. The red component data VDB are sequentially and intermittently read from a subsequent buffer circuit 33 each frame at timings and clock rates corresponding to frame feeding operations of the film and deflection of the electron beam BM (Fig. 1). As illustrated in Fig. 7, film recording data VD18 are thereby obtained.

In this embodiment, the time TOUT1 for which the red component data VDR, the green component data VDG, and the blue component data VDB of 1 frame picture data FRAME1, FRAME2, ... are respectively picture formed in 3 frame recording areas on the film 9, is set to 1 [second]. The red component data VDR, the green component data VDG and the blue component data VDB are sequentially and intermittently outputted in 1 [second].

Therefore, the red component data VDR, the green component data VDG, and the blue component data VDB are outputted for approximately 0.15 [second] at intervals of approximately 0.15 [second].

Thus, the film recording data VD18 is transmitted via a digital/analog converting circuit 34 to the EBR unit 15, whereby contrast pictures FR1, FG1, and FB1 (Fig. 2) of the respective color components are formed on the black-and-white film 9 (Fig. 1).

Simultaneously, a monitor circuit 35 is inputted the film recording data VD18 from the buffer circuit 33, wherein the data are converted into signals to monitor pictures equivalent to the pictures synthesized with the contrast pictures FR1, FG1, and FB1 of the respective color components formed on the black-and-white film 9.

Namely, as depicted in Fig. 8, the monitor circuit 35 inputs the film recording data VD18 to an input circuit 41 and a memory control circuit 42.

The input circuit 42 performs the series/parallel conversion of the film recording data VD18 consisting of digital signals, thereby lowering the clock frequency enough for the TTL/MOS elements constituting the monitor circuit 35 to deal with.

Besides, the memory control circuit 42 outputs, as control signals SCON, the transmission clock used for the serial/parallel conversion of the clock of the film recording data VD18, the write clock for storing the film recording data VD18 in the frame memories 43 and 44, the read clock for reading the stored data from the frame memories 43 and 44, the switching signals for switching between the frame memories 43 and 44, and the clock for performing the parallel/serial conversion in the output circuit 45.

The frame memory 43 herein comprises three frame memories adapted to store the three primary color signals VDR, VDG, and VDB transmitted as the film recording data VD18. Similarly, the frame memory 44 comprises three frame memories adapted to store the three primary color signals VDR, VDG, and VDB.

The frame memories 43 and 44 store the film recording data VD18 alternately every each frame based on the control signals SCON outputted from the memory control circuit 42.

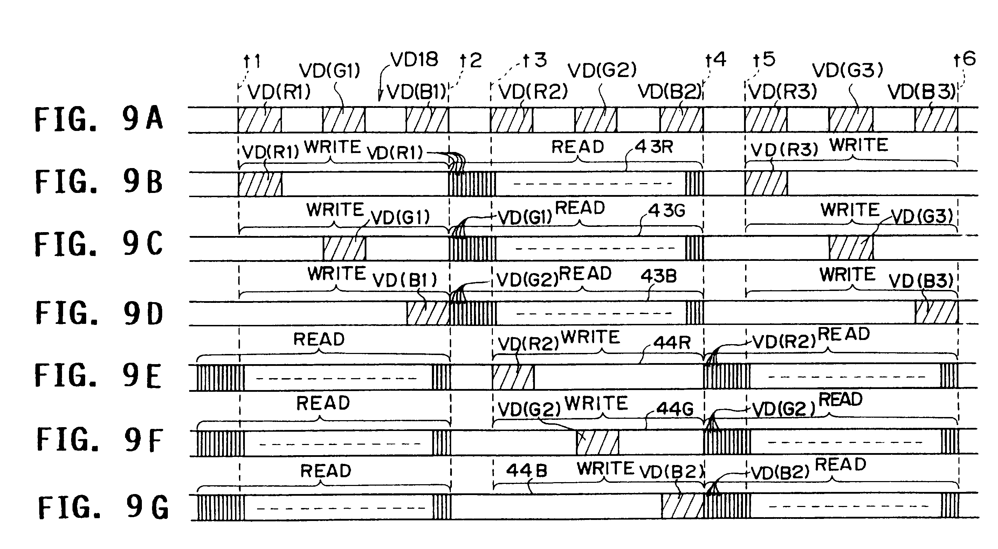

To be specific, as illustrated in Fig. 9A to 9G, the three frame submemories 43R (Fig. 9B), 43G (Fig. 9C), and 43B (Fig. 9D) of the frame memory 43 designed to store the three primary color signals VD(Rx), VD(Gx), and VD(Bx) (corresponding to VDR, VDG, and VDB in Fig. 7) of the film recording data VD18 (Fig. 9A), are controlled into the write mode by the control signals SCON in timings t1 to t2. The frame submemories sequentially store the primary color signals VD(R1), VD(G1), and VD(B1) of the first frame which is to be inputted.

Besides, when all the 1 frame primary color signals VD(R1), VD(G1), and VD(B1) are stored at the timing t2, the frame submemories 43R, 43G, and 43B are respectively controlled into the read mode by the control signals SCON. At this moment, the output circuit 45 repeatedly reads the respective 1 frame primary color signals VD(R1), VD(G1), and VD(B1) stored in the frame submemories 43R, 43G, and 43B at a rate of 1/30 [second] intervals based on the control signals SCON.

These frame submemories 44R (Fig. 9E), 44G (Fig. 9F), and 44B (Fig. 9G) of the second frame memory 44 are controlled into the write mode by the control signals SCON in timings t3 to t4 in which the first frame submemories 43R, 43G, and 43B are remaining in the read mode. These frame submemories sequentially store respective primary color signals VD(R2), VD(G2), and VD(B2) of the second frame which are inputted subsequent to the respective primary color signals VD(R1), VD(G1), and VD(B1) of the first frame.

Besides, at the timing t4 when all the 1 frame primary color signals VD(R2), VD(G2), and VD(B2) are stored, the frame submemories 44R, 44G, and 44B are respectively controlled to go the read mode by the control signals SCON. At this time, the output circuit 45 repeatedly reads the individual 1 frame primary color signals VD(R2), VD(G2), and VD(B2) stored in the frame submemories 44R, 44G, and 44B at the rate of 1/30 [second] intervals based on the control signals SCON.

Further, in timings t5 to t6 in which the frame submemories 44R, 44G, and 44B are controlled to go the read mode, the first frame submemories 43R, 43G, and 43B are respectively controlled to go the write mode by the control signals SCON. These frame submemories sequentially store respective primary color signals VD(R3), VD(G3), and VD(B3) of the third frame which are inputted subsequent to the respective primary color signals VD(R2), VD(G2), and VD(B2) of the second frame.

In this way, the first and second frame memories 43 (43R, 43G, and 43B) and 44 (44R, 44G, and 44B) are respectively controlled alternately to go the write and read modes. These memories store the sequentially inputted 1 frame primary color signals VD(R1), VD(G1), VD(B1) and VD(R2), VD(G2), VD(B2) and further, VD(R3), VD(G3), VD(B3) ... alternately, at every frame. Simultaneously, the frame memories 43 and 44 repeatedly read the stored 1 frame primary color signals VD(R1), VD(G1), VD(B1) and VD(R2), VD(G2), VD(B2) and further, VD(R3), VD(G3), VD(B3) ... at the rate of 1/30 [second]. At the same time, these signals undergo parallel/serial conversion in the output circuit 45 and further the digital/analog conversion, thereby obtaining the monitor picture signals VD19 of a normal video signal frequency (i.e., the frequency of the video picture data VD12 for forming the slow reproducing picture).

Hence, the monitor picture signal VD19 are inputted to a CRT 36 and can thereby be displayed as a picture.

Upon reaching the timing t2 at which all the 1 frame primary color signals VD(R1), VD(G1), and VD(B1) of the film recording data VD18 are stored in the frame memory 43, the memory control circuit 42 thereafter performs the control to repeatedly read the 1 frame picture data consisting of the primary color signals VD(R1), VD(G1), and VD(B1) from the frame memory 43. Upon reaching the timing t4 at which all the 1 frame primary color signals VD(R2), VD(G2), and VD(B2) of the film recording data VD18 are stored in the frame memory 44, the memory control circuit 42 thereafter repeatedly reads the 1 frame picture data consisting of the primary color signals VD(R2), VD(G2), and VD(B2) by a switchover, from the frame memory 44. In the monitor picture signals VD19, in timings t2 to t4 (approximately 1 [second]), synthetic color picture signals based on the 1 frame primary color signals VD(R1), VD(G1), and VD(B1) of the film recording data VD18 are thereby repeatedly formed. Also, in timings t4 to t6 (approximately 1 [second]), the synthetic color picture signals based on the 1 frame primary color signals VD(R2), VD(G2), and BD(B2) of the film recording data VD18 are repeatedly formed.

Hence, in timings t2 to t4, the synthetic color picture of the 1 frame primary color signals VD(R1), VD(G1), and VD(B1) of the film recording data VD18 is displayed as a still picture on the display screen of the CRT 36. And in timings t4 to t6, the synthetic color picture of the primary color signals VD(R2), VD(G2), and VD(B2) is displayed as a still picture. Hereafter, each time the 1 frame still pictures are sequentially displayed, thereby obtaining the slow reproducing pictures in which a scene proceeds each second.

The timing at which the frame memories 43 and 44 are changed over is set within the film feed time for which the black-and-white film 9 is fed on the one frame unit and further, is set within the perpendicular blanking interval of the monitor picture signal VD19. The picture signals outputted alternately form the first frame memory 43 and the second frame memory 44 can thereby be smoothly linked.

In addition, the monitor picture signals VD19 are inputted to the CRT 36 in synchronization with the film recording data VD18 recorded on the black-and-white film 9. It is therefore possible to display on the CRT 36 in real time, the film recording data VD18 recorded actually on the black-and-white film 9 (Fig. 2).

In the construction described above, the picture signal converting apparatus 20 carries out the gamma correction in the film gamma correcting circuit 31. It is avoided to change the color components by previously selectively correcting one of color components changing in the saturation, the chrominance and the luminance of the color.

Various colors and correcting data to be corrected are previously set in the color judgment circuits 28RA, 28GA and 28BA and the correction data generation circuits 28RB, 28GB and 28BB. It is thereby possible to properly correct corresponding to the color of the picture data inputted.

Therefore it is able to selectively color correct on the basis of the color which is the most sensitive in the aberration of color on the human visual characteristic.

According to the construction described above, it is able to effectively properly color correct by selectively color correcting depending on the color inputted on the basis of the color to be corrected and the correcting value of the color previously set.

In the embodiment described above, the color correction circuit 28 is provided at the prestage of the film gamma correction circuit 31. The present invention is not limited to this, it may be provided at the poststage of the film gamma correction circuit 31.

On this case, the correction data may be added on the basis of the color which is judged as changes actually.

In the embodiment also described above, the monochrome color is corrected. The present invention is not limited to this, it is able to correct various colors.

Further in the construction described above, the picture signal converting apparatus 20 restore to the original characteristic the gamma characteristic of the picture data which has been corrected by the video camera, using the linearizer 26. The picture data is corrected to fit with the characteristics corresponding to the gamma characteristics of the film as used by the film gamma correction circuit 31 so that only the film gamma characteristics is able to be separately corrected with paying no regard to the gamma characteristics of the camera.

Therefore when the video camera 21 is altered, the correction characteristics of the linearizer 26 is altered corresponding to this. When the film is altered, the correction characteristics of the film gamma correction circuit 31 is altered corresponding to this. This makes it possible to further facilitate the establishment of the optimum correction condition corresponding to the video camera 21 and the film as used.

According to the construction described above, the gamma correction is carried out in regard to the video camera 21 and the film respectively, and then the data for establishing the condition of the video camera 21 and the film each is able to be selected separately. When one of the video camera 21 and the film is altered, it is possible to change only the gamma characteristics of the altered one. This makes it possible to further improve the operational efficiency of the gamma correction.

As a result, it is possible to further improve flexibility of selecting the video camera 21 and the film.

By the way, the picture data including the camera gamma characteristics is previously corrected, and then in the color correction circuit 28, it is possible to color correct on the basis of only the film characteristics, with having no regard to the effect of the camera gamma characteristics.

In the embodiment described above, in the gamma correction circuit 31, the correction characteristics as illustrated in Fig. 4 is used. The present invention is not limited to this, it may be to select one of various gamma characteristics of the film. Moreover it is possible to select one of various gamma characteristics other than the film.

In the above discussed construction, during the picture signal converting process, the picture signal converting device 20 is capable of displaying the contrast picture of the respective primary color signals recorded on the black-and-white film 9, on the display screen of the CRT 36, as a color picture synthesized form the respective primary color pictures.

Hence, the color picture undergoing color correction, gamma correction, etc., within the picture signal converting circuit unit 24 can directly be seen visually as a display picture. It is therefore possible to monitor whether or not signal processing is being performed properly and confirm whether or not the picture converting device 20 is operating normally.

Hence, even when the color correction and the gamma correction are changed in individual cuts and scenes, the degree of correction is adjustable while confirming on the display screen, the picture that has been changed due to the correction.

Besides, when editing, a desired scene can be fetched from the video picture data VD12 while viewing the display screen of the CRT 36. This makes it possible to further facilitate the edit operation.

In the above construction, the conversion process can be monitored during the converting operation, thereby further improving the efficiency of the converting process.

Note that the embodiment described above has dealt with the case where the time for recording the 1 frame picture on the black-and-white film 9 is set to 1 [second]. The present invention is not, however, limited to this but may be set to other values of time.

The embodiment discussed above has dealt with the case where two frame memories 43 and 44 are employed. The number of the frame memories is not, however, limited to this value. What is important is that a plurality of frame memories is employed.

The embodiment given above has dealt with the case where the film recording data VD18 is formed at the frequency of 59.4 [MHz]. The present invention is not, however, limited to this frequency. The data may be formed at a variety of frequencies.

## Claims

1. An apparatus for converting an input video signal to a motion picture film image comprising,
means (41) for converting speed of transmission of said input video signal so that said input video signal is transmitted at the speed lower than nominal transmission speed of said input video signal;
processing means (42) for processing said transmitted video signal to generate a video signal suitable to be recorded on a film;
the apparatus furthermore comprising:
memory means having first (43) and second (44) memory area for storing successive frames of the output signal of said processing means (42), every one frame of said successive frames being alternately stored on said first and second memory area;
read-out control means (45) for controlling read-out operation of a signal stored in said first and second memory area so that said signal is read-out from said first and second memory area alternately at said nominal transmission speed; and
a monitor (36), wherein said processing means has separating means for separating said transmitted input video signal into signals of red, green and blue, said processing means processing each of said red, green and blue signals separately, and wherein said first and second memory area stores each of said signal of red, green and blue separately, and said read-out control means (45) controls read-out operations so that said signals of red, green and blue are read-out simultaneously and displayed upon said monitor (36) as a synthesised color picture.

## Patentansprüche

1. Vorrichtung zur Umwandlung eines Eingangsvideosignals in ein kinematographisches Laufbild,
mit einer Einrichtung (41) zur Umwandlung der Übertragungsgeschwindigkeit des Eingangsvideosignals derart, daß das Eingangsvideosignal mit einer niedrigeren als der nominalen Übertragungsgeschwindigkeit des Eingangsvideosignals übertragen wird,
mit einer Verarbeitungseinrichtung (42) für die Verarbeitung des übertragenen Videosignals, um ein für die Aufzeichnung auf einem Film geeignetes Videosignal zu erzeugen,
wobei die Vorrichtung ferner aufweist:
eine Speichereinrichtung mit einem ersten und einem zweiten Speicherbereich (43, bzw. 44) zum Speichern aufeinanderfolgender Vollbilder des Ausgangssignals der genannten Verarbeitungseinrichtung (42), wobei jedes einzelne Vollbild der genannten aufeinanderfolgenden Vollbilder abwechselnd in dem ersten und dem zweiten Speicherbereich gespeichert werden,
eine Auslesesteuereinrichtung (45) zum Steuern des Auslesevorgang eines in dem ersten und dem zweiten Speicherbereich gespeicherten Signals in der Weise, daß dieses Signal abwechselnd aus dem ersten und dem zweiten Speicherbereich mit der genannten nominalen Übertragungsgeschwindigkeit ausgelesen wird,
und einem Monitor (36),
wobei die Verarbeitungseinrichtung eine Trenneinrichtung aufweist zum Trennen des übertragenen Eingangsvideosignals in Rot-, Grün- und Blausignale, die Verarbeitungseinrichtung die Rot-, Grün- und Blausignale jeweils getrennt verarbeitet und wobei der erste und der zweite Speicherbereich die Rot-, Grün- und Blausignale jeweils getrennt speichert und die Auslese-Steuereinrichtung (45) die Auslesevorgänge so steuert, daß die Rot-, Grün- und Blausignale simultan ausgelesen und auf dem Monitor (36) als synthetisiertes Farbbild angezeigt werden.

## Revendications

1. Appareil pour convertir un signal vidéo d'entrée selon une image de film cinématographique comprenant :
un moyen (41) pour convertir une vitesse de transmission dudit signal vidéo d'entrée de telle sorte que ledit signal vidéo d'entrée soit transmis à la vitesse inférieure à la vitesse de transmission nominale dudit signal vidéo d'entrée ;
un moyen de traitement (42) pour traiter ledit signal vidéo transmis afin de générer un signal vidéo qui convienne pour être enregistré sur un film,
l'appareil comprenant en outre :
un moyen de mémoire comportant des première (43) et seconde (44) zones de mémoire pour stocker des photogrammes successifs du signal de sortie dudit moyen de traitement (42), chaque photogramme desdits photogrammes successifs étant stocké en alternance sur lesdites première et seconde zones de mémoire ;
un moyen de commande de lecture (45) pour commander une opération de lecture d'un signal stocké dans lesdites première et seconde zones de mémoire de telle sorte que ledit signal soit lu dans lesdites première et seconde zones de mémoire en alternance à ladite vitesse de transmission nominale ; et
un moniteur (36),
dans lequel ledit moyen de traitement comporte un moyen de séparation pour séparer ledit signal vidéo d'entrée transmis selon des signaux de rouge, de vert et de bleu, ledit moyen de traitement traitant séparément chacun desdits signal de rouge, de vert et de bleu et dans lequel lesdites première et seconde zones de mémoire stockent chacun desdits signaux de rouge, de vert et de bleu séparément et ledit moyen de commande de lecture (45) commande des opérations de lecture de telle sorte que lesdits signaux de rouge, de vert et de bleu soient lus simultanément et affichés sur ledit moniteur (36) en tant qu'image couleur synthétisée.
